# EUROPÄISCHE PATENTANMELDUNG

(11) **EP 3 361 021 A1**
(43) Veröffentlichungstag der Anmeldung: **15.08.2018**
(21) Anmeldenummer: 17203446.4
(22) Anmeldetag: 24.11.2017
(51) Int. Cl.: E04G 1/32, E04G 1/34, E04G 1/36, E04G 3/22

(54) **VORRICHTUNG ZUM AUFSTELLEN EINER LEITER ODER EINES TRITTS AUF EINER TREPPE**

(30) Priorität: 08.02.2017 DE 202017100661 U
(71) Anmelder: Hailo-Werk Rudolf Loh GmbH & Co. KG, 35708 Haiger (DE)
(72) Erfinder: Fischer, Christian, 57078 Siegen (DE); Weinhold, Gerd, 57319 Bad Berleburg (DE); Faut, Alexander, 57482 Wenden (DE)
(74) Vertreter: Graefe, Jörg

(57) **Zusammenfassung**

Die Erfindung betrifft eine Vorrichtung (V) zum Aufstellen einer Leiter oder eines Tritts auf einer Treppe mit einer Plattform, auf welcher die Leiter oder der Tritt aufstellbar ist und einem Gestell, mit welchem die Plattform auf der Treppe abstützbar ist, wobei das Gestell wenigstens zwei schwenkbare Beine (30) aufweist, die um je eine Schwenkachse oder um eine Schwenkachse schwenkbar sind, wobei die Schwenkachsen oder die Schwenkachse in der Ebene der Plattform oder parallel dazu liegen bzw. liegt.

## Beschreibung

Die vorliegende Erfindung betrifft eine Vorrichtung zum Aufstellen einer Leiter oder eines Tritts auf einer Treppe.

Aus dem Dokument DE 10 2004 023 357 ist eine Vorrichtung bekannt, die dazu geeignet und eingerichtet ist, dass mit ihr eine Leiter oder ein Tritt auf einer Treppe aufgestellt werden kann.

Die aus dem Dokument DE 10 2004 023 357 A1 bekannte Vorrichtung hat ein Gestell mit einem Ständer und einer dazu um eine horizontale Achse schwenkbaren Platte. Der Ständer hat zwei Füße, die auf einer Treppenstufe platziert werden können. Die Platte des Gestells ist drehbar mit einer Plattform verbunden. Die Plattform stützt sich mit einem Ende auf dem Gestell ab. Mit einem anderen Ende liegt die Plattform auf einer weiteren Stufe der Treppe auf, und zwar so, dass die Plattform im Wesentlichen waagerecht ist.

Auf die Plattform der Vorrichtung können Leitern oder Tritte aufgestellt werden.

Die Vorrichtung hat sich in der Praxis nicht durchgesetzt.

Der Erfindung liegt daher das Problem zugrunde, eine Vorrichtung der eingangs genannten Art mit einem Gestell und einer Plattform vorzuschlagen, die für eine Anwendung besser geeignet ist.

Diese Aufgabe wird erfindungsgemäß dadurch gelöst, dass das Gestell einer erfindungsgemäßen Vorrichtung wenigstens zwei schwenkbare Beine aufweist, die um je eine Schwenkachse oder um eine Schwenkachse schwenkbar sind, wobei die Schwenkachsen oder die Schwenkachse in einer Ebene der Plattform oder parallel dazu liegen bzw. liegt.

Anders als von der in dem Dokument DE 10 2004 023 357 A1 offenbarten Vorrichtung bekannt weist das Gestell der erfindungsgemäßen Vorrichtung wenigstens zwei Beine auf, die schwenkbar an der Plattform angebracht sind. Die aus dem Dokument DE 10 2004 023 357 A1 bekannte Vorrichtung weist ein einziges Bein auf, dass an einer Platte um eine Achse parallel zur Plattform befestigt ist, wobei die Platte drehbar und verschiebbar an der Plattform angebracht ist. Die Verbindung der beiden Beine der erfindungsgemäßen Vorrichtung mit der Plattform ist stabiler als die Anbindung des Beins der bekannten Vorrichtung an die Plattform unter Zwischenschaltung der drehbaren und verschiebbaren Platte. Dadurch ist auch die Vorrichtung insgesamt stabiler und macht einen solideren Eindruck.

Wenigstens eines der Beine kann verlängerbar sein. Es kann insbesondere ausziehbar, z.B. teleskopartig ausziehbar sein. Damit ist es möglich, dass die Beine, sofern sie zunächst eine gleiche Länge haben, auf unterschiedliche Längen der Beine einzustellen. Beine unterschiedlicher Länge können auf verschiedenen Stufen einer Treppe abgestützt werden, so dass die Plattform waagerecht oder nahezu waagerecht ausgerichtet werden kann, wenn die beiden Beine nicht auf einer Stufe angeordnet werden können. Das kann insbesondere bei einer Wendeltreppe, einer Spindeltreppe oder einer gewendelten Treppe der Fall sein.

Damit die Beine teleskopartig ausziehbar sind, können sie zwei Beinteile aufweisen, ein erstes Beinteil und ein in dem ersten Beinteil verschiebbar angeordnetes zweites Beinteil. In den Beinen können wenigstens je eine Feder angeordnet sein, durch welche die zweiten Beinteile in die ersten Beinteile gezogen werden, wenn beide Beinteile nicht durch ein Klemm- oder Rastmittel gegeneinander festgelegt sind. Das Rastmittel kann so gestaltet sein, dass das zweite Beinteil ohne manuelle Betätigung des Rastmittels ausgezogen werden kann. Dazu kann ein Rastbolzen oder eine Rasthaken eine Schräge aufweisen. Durch die Auszugsbewegung rutscht der Rastbolzen oder der Rasthaken aus einem Rastloch in dem zweiten Beinteil. Erst wenn das zweite Beinteil in der entgegengesetzten Richtung bewegt wird, rastet der Rastbolzen oder der Rasthaken wieder in ein Rastloch, wodurch das erste und das zweite Beinteil gegeneinander festgelegt sind. Zum Einschieben der zweiten Beinteile müssen die Rastbolzen oder die Rasthaken gegen den Druck einer zweiten Feder manuell zurückgezogen werden.

An den freien Enden der Beine können Stehbolzen vorgesehen sein. Auf diese Stehbolzen können Rändelmuttern aufgeschraubt sein. An den Enden der Stehbolzen können Füße befestigt sein. In jedem dieser Füße können Rändelmuttern drehbar gelagert sein. Ein Rand jeder Rändelmutter ragt vorzugsweise durch Schlitze in den Füßen nach außen, so dass die Rändelmuttern durch einen Benutzer gedreht werden können. Die Rändelmuttern können auf die Stehbolzen aufgeschraubt sein. Durch drehen der Rändelmuttern können die Rändelmuttern selbst und die Füßen auf den Stehbolzen verschoben werden. Damit ist ein Feineinstellung der Länge des Beins möglich.

Die Beine oder Teile der Beine können über eine Traverse miteinander verbunden sein, was dem Gestell zusätzlich Stabilität verschafft. Zusätzliche Stabilität kann erreicht werden, wenn die Beine oder Teile der Beine und die Traverse über erste Streben miteinander verbunden sind.

Auf oder an der Plattform kann mindestens ein Haltemittel, insbesondere ein Klemmmittel, Clip oder ähnliches angebracht sein, in welchem im eingeklappten Zustand ein Bein, beide Beine und/oder die Travers lösbar festgelegt sind. Durch diese Befestigung kann ein unbeabsichtigtes Ausklappen der Beine verhindert werden, wenn die erfindungsgemäße Vorrichtung nicht gebraucht wird.

Das Gestell einer erfindungsgemäßen Vorrichtung kann wenigstens eine zweite Strebe aufweisen, die mit einem ersten Ende schwenkbar an einem der Beine angebracht ist oder mit einem ersten Ende schwenkbar und zumindest mittelbar an der Plattform angebracht ist. Die ersten Streben und die wenigstens eine zweite Strebe können in senkrecht zueinander ausgerichteten Ebenen angeordnet sein.

Ein zweites Ende der zweiten Strebe kann schwenkbar und schiebbar an einem der Beine oder schwenkbar und schiebbar und zumindest mittelbar an der Plattform angebracht sein. Die zweite Strebe kann einen Schlitz aufweisen, der von einem vorstehenden Element des Beines oder der Plattform durchgriffen wird. Die wenigstens eine zweite Strebe kann dadurch einerseits um das vorstehende Element schwenkbar aber auch gegenüber den vorstehenden Elementen verschiebbar sein.

Die Plattform kann sich auf einer Seite der Vorrichtung über das Gestell auf den Stufen der Treppe abstützen, während auf einer anderen Seite die Plattform auf Stufen der Treppe aufliegt. Das Gestell einer erfindungsgemäßen Vorrichtung kann aber auch Arme aufweisen, die ausziehbar zumindest mittelbar an der Plattform befestigt sind. Die Auszugsebene ist dabei in einer Ebene der Plattform oder parallel zu dieser Ebene. Über diese Arme kann sich die andere Seite der Plattform auf Stufen der Treppe abstützen. Die Arme können durch das Ausziehen in unterschiedliche Länge gebracht werden. Die Arme und Beine können nicht unmittelbar miteinander verbundene Teile des Gestells einer erfindungsgemäßen Vorrichtung bilden.

Die vorzugsweise zwei Arme des Gestells können an gegenüberliegenden Seiten der Plattform zumindest mittelbar an der Plattform befestigt sein.

Die Plattform einer erfindungsgemäßen Vorrichtung kann eine Einfassung und einen Platte aufweisen, wobei die Einfassung die Platte an wenigstens zwei gegenüberliegenden Rändern einfasst. Als Ebene der Plattform wird vorstehend die Ebene bezeichnet, die einem aufgestellten Zustand der Vorrichtung der oberen oder unteren Fläche der Platte oder einer dazu parallelen Ebene entspricht.

Die Beine können an der Einfassung der Plattform schwenkbar befestigt sein. Auch die zweiten Streben können schwenkbar oder schwenkbar und schiebbar an der Einfassung befestigt sein.

Die Einfassung kann Hohlprofile aufweisen, in welchen oder an welchen die Arme verschiebbar bzw. ausziehbar befestigt sind.

Die Plattform, insbesondere die Platte der Plattform, kann ein oder mehrere Grifflöcher aufweisen, an welchen ein Benutzer angreifen kann, um die Vorrichtung mit ausgeklappten Beinen oder im zusammengeklappten Zustand zu transportieren.

Weitere Merkmale und Vorteile der vorliegenden Erfindung werden deutlich anhand der nachfolgenden Beschreibung eines in den Figuren dargestellten Ausführungsbeispiels. Darin zeigen:
- Fig. 1: eine Ansicht des Ausführungsbeispiels aus der Vogelperspektive im ausgeklappten Zustand,
- Fig. 2: eine Seitenansicht des Ausführungsbeispiels im ausgeklappten Zustand,
- Fig. 3: eine Ansicht des Ausführungsbeispiels im ausgeklappten Zustand von vorne,
- Fig. 4: eine Draufsicht auf das Ausführungsbeispiels im ausgeklappten Zustand,
- Fig. 5: eine Ansicht des Ausführungsbeispiels aus der Vogelperspektive im eingeklappten Zustand,
- Fig. 6: eine Seitenansicht des Ausführungsbeispiels im eingeklappten Zustand,
- Fig. 7: eine Ansicht des Ausführungsbeispiels im eingeklappten Zustand von vorne,
- Fig. 8: eine Draufsicht auf das Ausführungsbeispiels im eingeklappten Zustand,
- Fig. 9: eine Ansicht des Ausführungsbeispiels aus der Vogelperspektive im ausgeklappten Zustand mit zum Teil ausgezogenen Armen und Beinen,
- Fig. 10: eine Seitenansicht des Ausführungsbeispiels im ausgeklappten Zustand mit zum Teil ausgezogenen Armen und Beinen,
- Fig. 11: eine Ansicht des Ausführungsbeispiels im ausgeklappten Zustand mit zum Teil ausgezogenen Armen und Beinen von vorne,
- Fig. 12: eine Draufsicht auf das Ausführungsbeispiels im ausgeklappten Zustand mit zum Teil ausgezogenen Armen und Beinen,
- Fig. 13: einen Schnitt u.a. durch ein Rastmittel und
- Fig. 14: einen Schnitt durch ein Klemmmittel.

Das in den Figuren dargestellte Ausführungsbeispiel einer erfindungsgemäßen Vorrichtung V zum Aufstellen einer Leiter oder eines Tritts auf einer Treppe weist eine Plattform auf. Die Plattform wird u.a. von einer Platte 10 gebildet. Drei Kanten dieser Platte 10 sind mit Hohlprofilen 11, 12 eingefasst, nämlich gegenüberliegende Längsseiten der Platte 10 durch Hohlprofile 11 und eine der Schmalseiten durch das Hohlprofil 12. Ecken zwischen dieser Schmalseite und den beiden Längsseiten sind mit Formteilen 13 eingefasst, die in Enden der Hohlprofile 11, 12 eingesteckt sind. Die Formteile 13 können aus Kunststoff hergestellt sein; Die Hohlprofile 11, 12 sind vorzugsweise aus Aluminium hergestellt.

Die Hohlprofile 11, 12 haben vorzugsweise zwei zueinander parallel auskragende Stege 111, die einen Abstand zueinander haben, der einer Dicke der Platte 10 entspricht. Die Platte 10 ist zwischen die beiden Stege 111 eingesteckt. Über Nieten 14, die durch fluchtende Durchgangslöcher in den Stegen 111 und der Platte 10 geführt sind, sind die Hohlprofile 11, 12 fest mit der Platte 10 verbunden. Es können auch andere geeignete Befestigungselemente oder Befestigungsarten gewählt werden.

In der Platte 10 sind zwei Grifflöcher 100, 101 vorgesehen, die einen Transport der erfindungsgemäßen Vorrichtung V erleichtern.

Die Plattform kann über ein mehrteiliges Gestell auf einer Treppe aufgestellt werden.

Das Gestell weist zwei Beine 30 und zwei Arme 37 auf.

An den Hohlprofilen 11 sind die zwei Beine 30 schwenkbar befestigt. Schwenklager, die die Verbindung zwischen den Beinen 30 und den Hohlprofilen 11 herstellen, sind durch Kappen 36 abgedeckt.

Die beiden Beine 30 weisen zwei Teile 300, 301 auf. Ein erstes Teil 300 ist mit dem Schwenklager verbunden. Der erste Teil 300 ist ein Hohlprofil. Ein zweiter Teil 301 des Beins 30 ist vom ersten Teil 300 geführt verschiebbar in dem ersten Teil 300 angeordnet. Über ein Rastmittel 35, kann das zweite Teil 301 gegenüber dem ersten Teil 300 festgesetzt sein. Der erste Teil und auch der zweiten Teil 301 können Profile, insbesondere Aluminiumprofile sein.

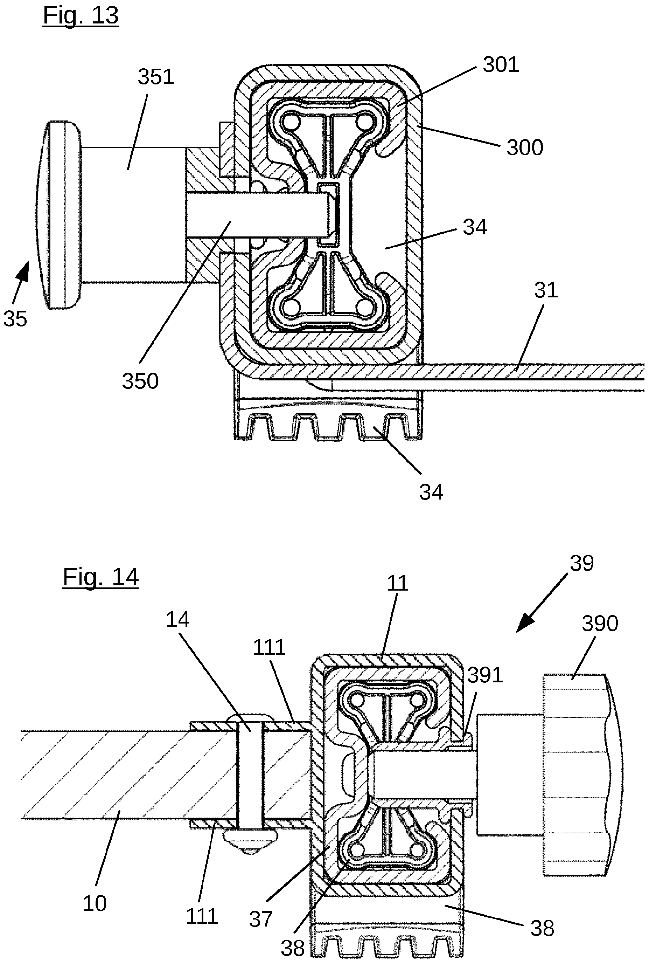

Die Rastmittel 35 wirken mit Löchern zusammen, die in den zweiten Teilen 301 der Beine 30 vorgesehen sind (siehe Fig. 13). Die Löcher sind hintereinanderliegend in einem Bereich der zweiten Teile 301 zwischen dem einen, geführten Ende und dem anderen, mit dem Endstück 34 versehenen Ende vorgesehen.

Die Rastmittel 35 sind in Löchern der ersten Teile 300 der Beine 30 verschiebbar angeordnet. Diese Löcher werden von einem Stift 350 der Rastmittel 35 durchgriffen, der auch in eines der Löcher in den zweiten Teilen 301 der Beine 30 eingreift, das fluchtend zu dem Loch in dem ersten Teil 300 des Beins 30 angeordnet ist. Über eine Feder (nicht dargestellt) wird der Stift in dem Loch im zweiten Teil 301 gehalten.

Die Rastmittel 35 weisen einen Knauf 351 auf, der eine Handhabe bietet, den Stift gegen den Druck der Feder zurückzuziehen und somit aus dem Loch in dem zweiten Teil 301 herauszuziehen. Das zweite Teil 301 des Beines kann dann gegenüber dem ersten Teil 300 des Beines 30 verschoben werden, um ein anderes Loch des zweiten Teils 301 des Beines 30 in Flucht mit dem Loch im ersten Teil des Beines 301 zu bringen und in dieser Position den Stift 350 des Rastmittels 35 einzurasten.

An einem nicht in dem ersten Teil 300 angeordneten Ende des zweiten Teils 301 ist ein Endstück 34 angebracht, das bei der Benutzung der erfindungsgemäßen Vorrichtung auf einem Untergrund abgestützt ist. Das Endstück 34 kann ein Kunststoffformteil, insbesondere ein Spritzgussteil sein.

Die ersten Teile 300 der beiden Beine 30 sind vorzugsweise über eine Traverse 31 mit einander verbunden. Außerdem besteht vorzugsweise zwischen dieser Traverse 31 und jedem der ersten Teile 300 über erste Streben 32 eine Verbindung. Sowohl die Traverse 31 als auch die ersten Streben 32 dienen einer Aussteifung des Gestells.

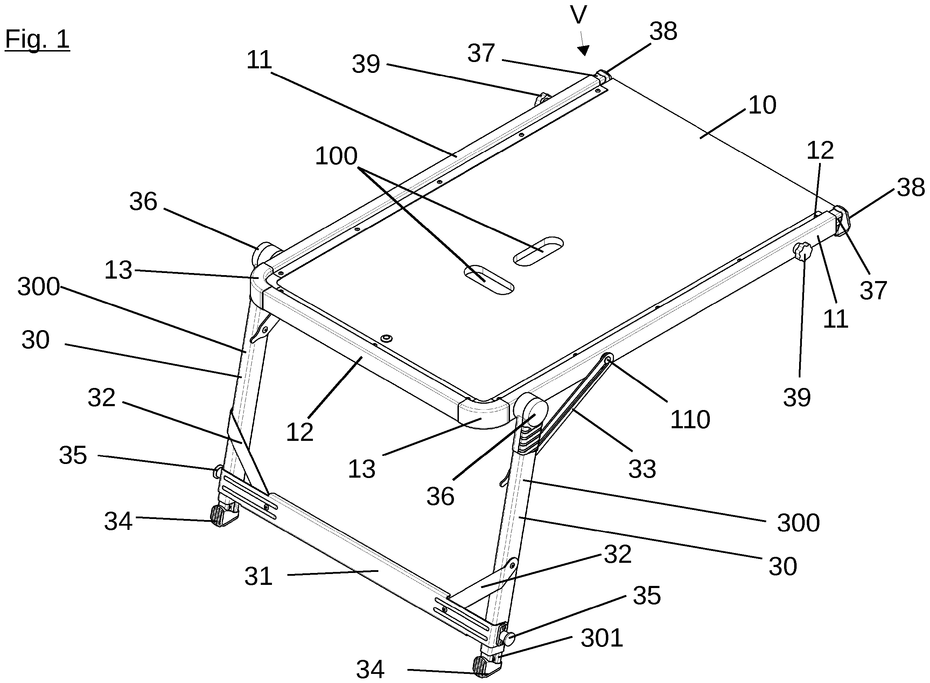

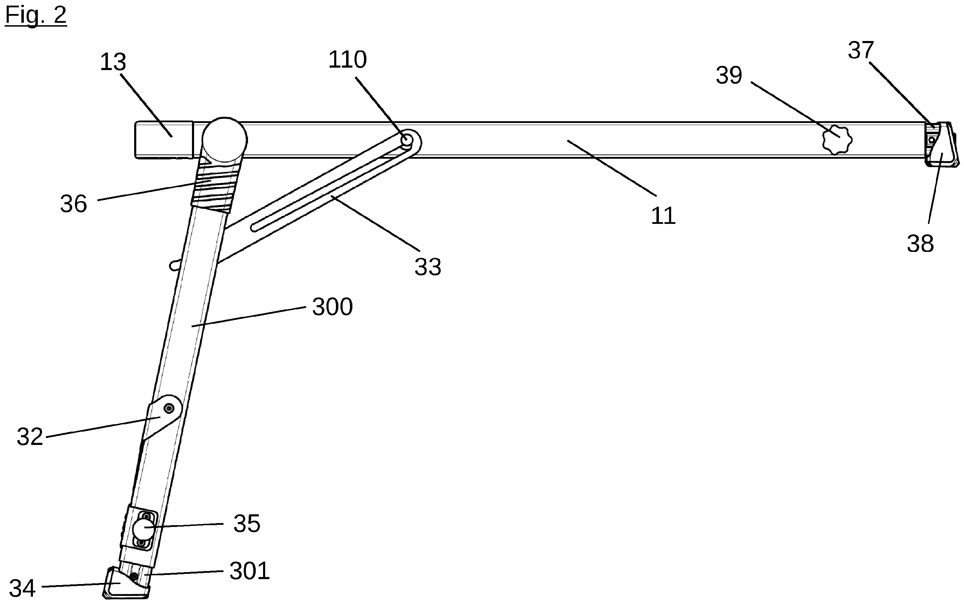

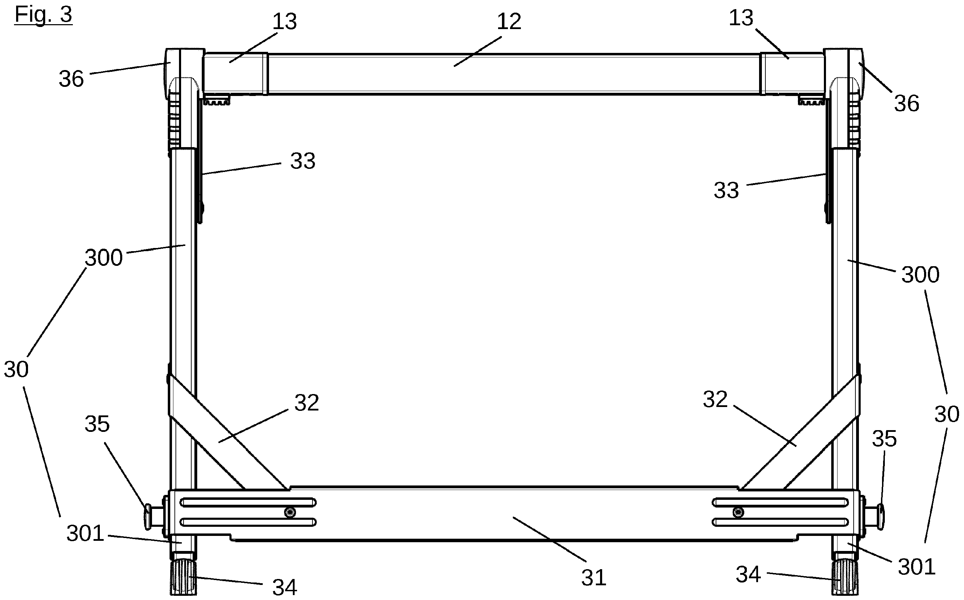

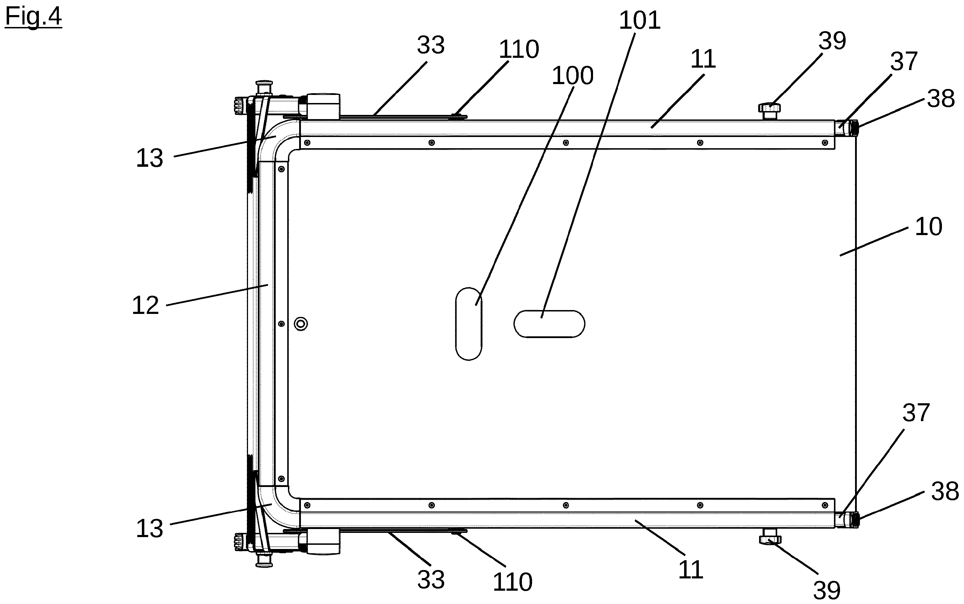

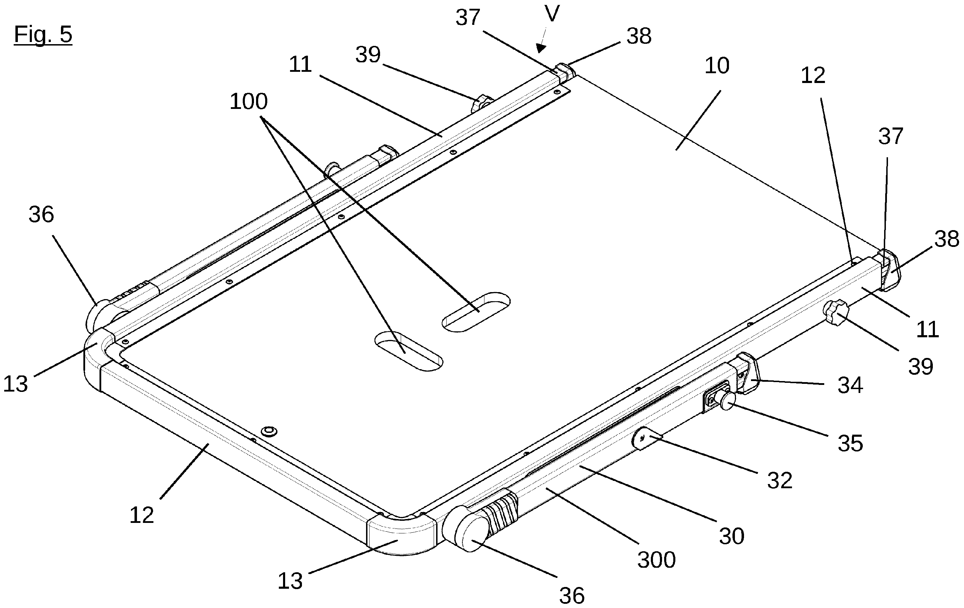

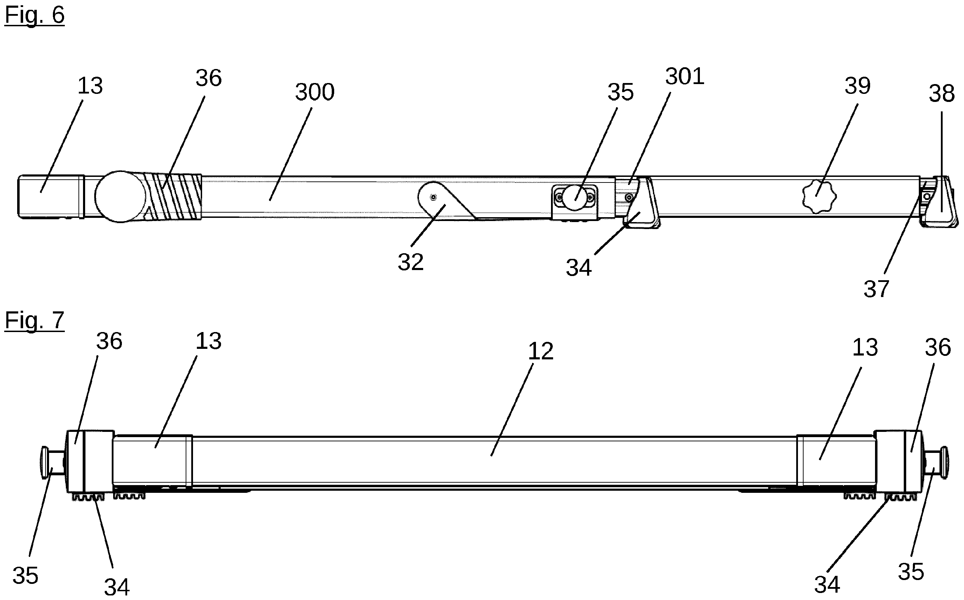

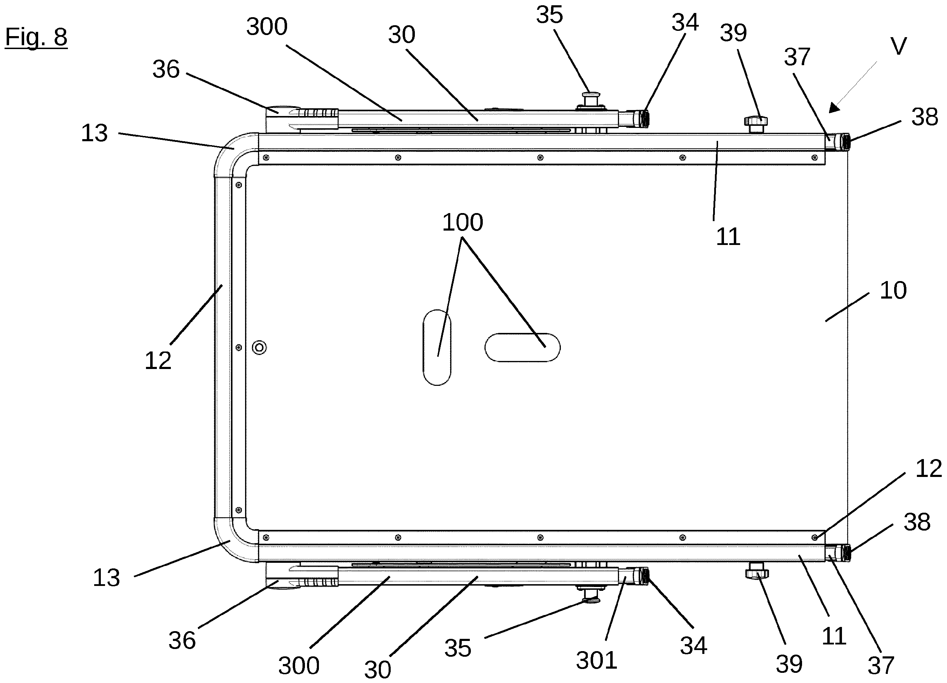

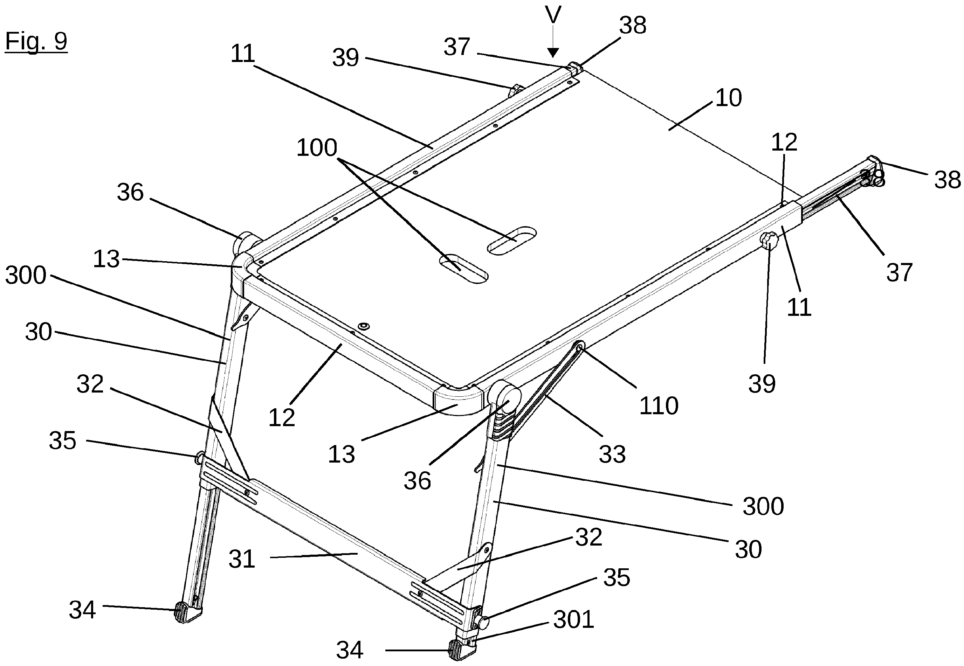

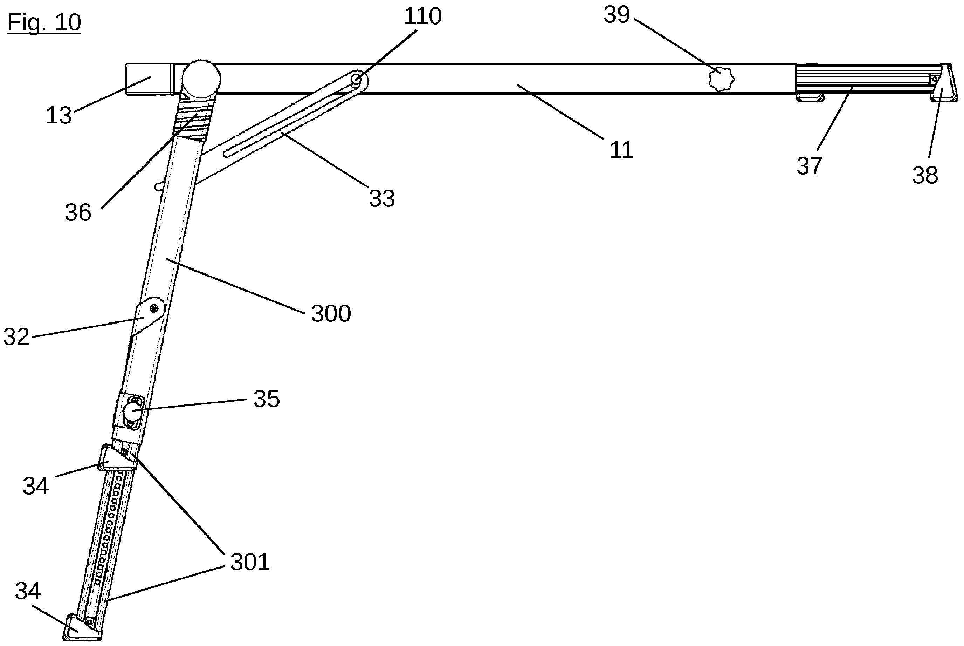

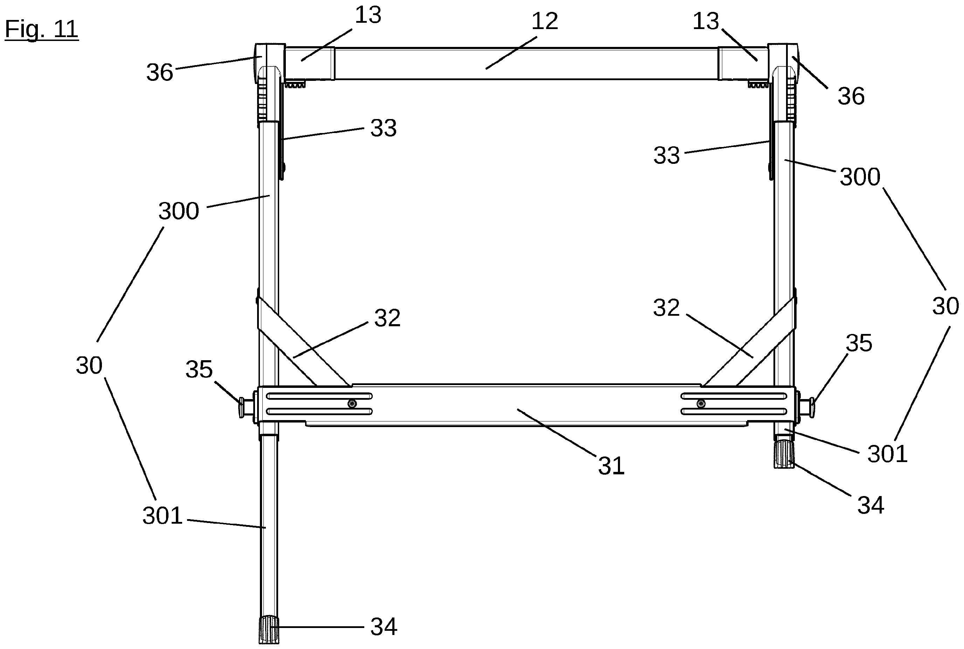

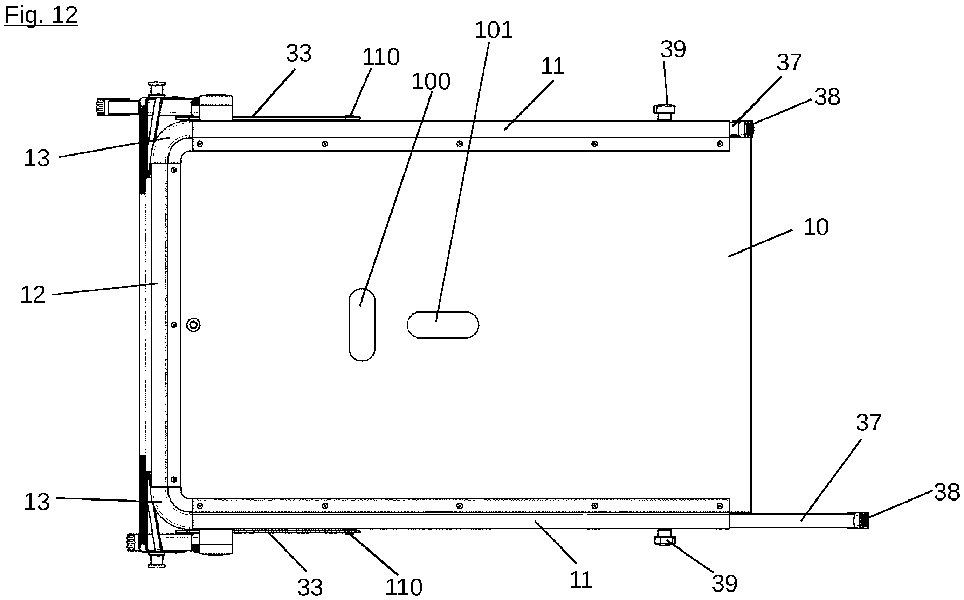

Ferner sind vorzugsweise zweite Streben 33 vorgesehen, die das erste Teil 300 jedes Beins 30 mit dem Hohlprofil 11 verbinden, an denen das erste Teil 300 schwenkbar befestigt ist. Die zweiten Streben 33 legen die Endpositionen einer Schwenkbewegung der schwenkbaren Beine 30 fest. Die zweiten Streben 33 sind schwenkbar an den ersten Teilen 300 der Beine befestigt. Die zweiten Streben weisen einen Längsschlitz, insbesondere Langlöcher auf. Jeder Schlitz wird von einem an den Hohlprofilen befestigten, vorspringenden Element 110 mit einem pilzkopfartigen Kopf, zum Beispiel einer Schraube oder dergleichen, durchgriffen. Der Kopf des Elements 110 ist durch den Schlitz geführt. Bei einer Schwenkbewegung der Beine 30 werden die zweiten Streben 33 relativ zu dem vorspringenden Element 110 bewegt. Dabei gleiten die Köpfe in den Schlitzen der zweiten Streben 33. Durch die Läge der Schlitze ist die Bewegung der Köpfe und dadurch auch die Bewegung der zweiten Streben und der Beine bezüglich der Plattform begrenzt. Die Länge der Schlitze, der Lagerpunkt der zweiten Streben 33 und die Position der vorspringenden Elemente 110 ist so gewählt, dass in der einen Endposition die Beine ausgeklappt sind (siehe Fig. 1 bis 4 und 9 bis 12), während in der anderen Endposition die Beine eingeklappt sind und an einer Unterseite der Plattform anliegen oder parallel zur Plattform liegen (Fig. 5 bis 8).

In der ausgeklappten Stellung können die vorspringenden Elemente in Ausbuchtungen des Längsschlitzes eingreifen. Dadurch kann bei einer aufgestellten Vorrichtung ein unbeabsichtigtes Verschieben der vorspringenden Elemente 110 vermieden werden.

Die zweiten Streben 33 können in eine von der Plattform abgewandte Richtung über den Lagerpunkt an den Beinen und die Beine selbst hinausragen. Diese, die Beine überragenden Enden der zweiten Streben 33 können Handhaben bilden, mit denen Streben 33 um den Lagerpunkt geschwenkt werden können, zum Beispiel um beim Zusammenklappen der Vorrichtung die vorspringenden Elemente 110 aus den Ausbuchtungen der Längsschlitze in den zweiten Streben 33 herauszuheben.

Die Arme 37 des Gestells sind Stangen, zum Beispiel Profile, die in den Hohlprofilen 11 der Einfassung der Platte 10 verschiebbar geführt sind. Die Arme 37 weisen Endstücke 38 auf, die an einem Ende der Arme 37 angebracht sind, das nicht in den Hohlprofilen 11 der Einfassung geführt ist. Eine Auszugsstellung der Arme 37 relativ zu den Hohlprofilen kann durch ein Klemmmittel 39 festgelegt werden.

Die Arme 37 können das gleiche Querschnittprofil wie die zweiten Teile 301 der Beine 30 aufweisen. Auch funktional lassen sich die beiden Arme mit den zweiten Teilen 301 der Beine 30 vergleichen: Sowohl jeder der Arme 37 als auch jedes zweite Teil der Beine 301 lässt sich unabhängig von anderen ausziehen. Dadurch lassen sich die Arme 37 und die Beine 30 so einstellen, dass sie auf einer Treppe Auflagepunkte auf unterschiedlichen Stufen erreichen können.

Bei den Armen 37 und Beinen 30 gibt es auch weitere Gemeinsamkeiten. So können die Endstücke 38 den Endstücken 34 entsprechen.

Die Klemmmittel 39 umfassen Sternschrauben 390, die in Hülse 391 mit einem Innengewinde eingeschraubt sind (siehe Fig. 14). Die Hülsen sind in Löchern in den Hohlprofilen 11 eingesetzt. Durch Drehung der Sternschrauben 390 können die Enden der Sternschrauben 390 gegen die in dem Hohlprofil 11 verschiebbaren Arme 37 gedrückt werden, wodurch die Hohlprofil 11 und die Arme 37 durch Klemmung zueinander festgelegt werden.

## Patentansprüche

1. Vorrichtung (V) zum Aufstellen einer Leiter oder eines Tritts auf einer Treppe mit einer Plattform, auf welcher die Leiter oder der Tritt aufstellbar ist und einem Gestell, mit welchem die Plattform auf der Treppe abstützbar ist,
**dadurch gekennzeichnet, dass**
das Gestell wenigstens zwei schwenkbare Beine (30) aufweist, die um je eine Schwenkachse oder um eine Schwenkachse schwenkbar sind, wobei die Schwenkachsen oder die Schwenkachse in der Ebene der Plattform oder parallel dazu liegen bzw. liegt.

2. Vorrichtung (V) nach Anspruch 1, **dadurch gekennzeichnet, dass** die Beine (30) verlängerbar, insbesondere ausziehbar, z.B. teleskopartig ausziehbar sind.

3. Vorrichtung (V) nach Anspruch 1 oder 2, **dadurch gekennzeichnet, dass** die Beine (30) oder Teile (300) der Beine (30) über eine Traverse (31) miteinander verbunden sind.

4. Vorrichtung (V) nach Anspruch 3, **dadurch gekennzeichnet, dass** die Beine (30) oder Teile (300) der Beine (30) und die Traverse (31) über Streben (32) miteinander verbunden sind.

5. Vorrichtung (V) nach einem der Ansprüche 1 bis 4, **dadurch gekennzeichnet, dass** das Gestell wenigstens eine zweite Strebe (33) aufweist, die mit einem ersten Ende schwenkbar an einem der Beine (30) oder mit einem ersten Ende schwenkbar und zumindest mittelbar an der Plattform angebracht ist.

6. Vorrichtung (V) nach Anspruch 5, **dadurch gekennzeichnet, dass** ein zweites Ende der zweiten Strebe (33) schwenkbar und schiebbar an einem der Beine (30) oder schwenkbar und schiebbar und zumindest mittelbar an der Plattform angebracht ist.

7. Vorrichtung (V) nach dem Oberbegriff des Anspruchs 1, insbesondere nach einem der Ansprüche 1 bis 6, **dadurch gekennzeichnet, dass** das Gestell Arme (37) aufweist, die ausziehbar zumindest mittelbar an der Plattform befestigt sind.

8. Vorrichtung (V) nach Anspruch 7, **dadurch gekennzeichnet, dass** die Arme (37) an gegenüberliegenden Seiten der Plattform zumindest mittelbar an der Plattform befestigt sind.

9. Vorrichtung (V) nach einem der Ansprüche 1 bis 9, **dadurch gekennzeichnet, dass** die Plattform eine Einfassung (11, 12, 13) und eine Platte (10) aufweist, wobei die Einfassung (11, 12, 13) die Platte (10) an wenigstens zwei gegenüberliegenden Rändern einfasst.

10. Vorrichtung (V) nach Anspruch 9, **dadurch gekennzeichnet, dass** die Beine (30) an der Einfassung (11, 12, 13) schwenkbar befestigt sind.

11. Vorrichtung (V) nach Anspruch 9 oder 10, **dadurch gekennzeichnet, dass** die zweiten Streben (33) an der Einfassung (11, 12, 13) schwenkbar oder schwenkbar und schiebbar befestigt sind.

12. Vorrichtung (V) nach einem der Ansprüche 9 bis 11, **dadurch gekennzeichnet, dass** die Einfassung (11, 12, 13) Hohlprofile aufweist, in welchen oder an welchen die Arme (37) verschiebbar befestigt sind.

13. Vorrichtung (V) nach einem der Ansprüche 1 bis 12, **dadurch gekennzeichnet, dass** die Plattform ein oder mehrere Grifflöcher (100) aufweist.
